# EUROPEAN PATENT APPLICATION

(11) **EP 2 461 632 A2**
(43) Date of publication of application: **06.06.2012**
(21) Application number: 10804621.0
(22) Date of filing: 28.06.2010
(51) Int. Cl.: H04W 60/00, H04W 48/00, H04W 16/16

(54) **METHOD AND SYSTEM FOR REGISTRATION OF OWNER'S TERMINAL IN SMALL NETWORK OF BASE STATIONS**

(30) Priority: 27.07.2009 KR 20090068263
(71) Applicant: Pantech Co., Ltd., Seoul 121-270 (KR)
(72) Inventor: KIM, Tae Jong, Seoul 122-070 (KR); HAN, Kun Wook, Seoul 150-073 (KR)
(74) Representative: Herzog, Markus
(86) International application number: PCT/KR2010/004170
(87) International publication number: WO 2011/013908

(57) **Abstract**

Provided is a system for registering a terminal, including: a verification unit to verify whether the terminal is a closed subscriber group (CSG) member in response to a registration request to a small base station that is received from the terminal; a search unit to search for an owner terminal of the small base station when the terminal is not the CSG member as the verification result; a request unit to request the found owner terminal to determine whether to approve a CSG member registration of the terminal; and a registration unit to register the terminal as a temporary CSG member when the owner terminal approves the CSG member registration in response to the request.

## Description

### CROSS-REFERENCE TO RELATED APPLICATIONS

This application is the National Stage Entry of International Application PCT/KR2010/004170, filed on June 28, 2010, and claims priority from and the benefit of Korean Patent Application No. 10-2009-0068263, filed on July 27, 2009, both of which are incorporated herein by reference for all purposes as if fully set forth herein.

### BACKGROUND OF THE INVENTION

FIELD OF THE INVENTION

Embodiments of the present invention relate to a method and system for registering a terminal by an owner terminal of a small base station network.

DISCUSSION OF THE BACKGROUND

With developments in a mobile communication, many users use a portable terminal (hereinafter, referred to as a 'terminal'). However, due to a wide coverage of each base station, the call quality may be degraded. To prevent the call quality from being degraded, a system such as a femtocell that covers a significantly small area compared to an existing mobile communication service coverage has been developed. The femtocell enables a user to readily use a wired/wireless communication using a terminal by connecting a very small base station to a wired Internet protocol (IP) network within home.

The femtocell is also referred to as a Home Node B (hereinafter, referred to as 'H(e)NB'). H(e)NB may provide a coverage expansion and a specialized service to a terminal using H(e)NB. However, in a current standard, to add, as a temporary closed subscriber group (CSG) member, a predetermined terminal that is not a CSG member, an owner terminal may access a member management server to thereby register the predetermined terminal as a temporary CSG member.

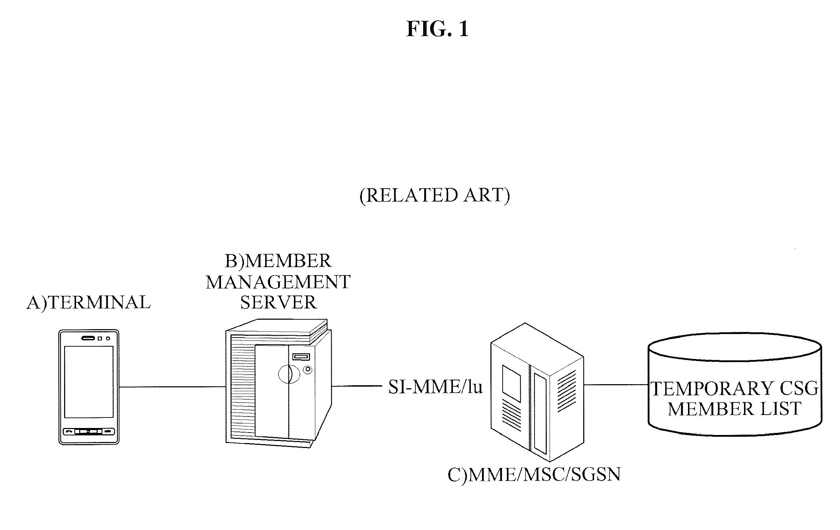

FIG. 1 is a diagram illustrating a system for registering a temporary CSG member according to a related art.

As shown in FIG. 1, a terminal A, which is not a CSG member, may request a member management server B for a temporary CSG member registration. The member management server B may transmit the request to Microsoft Mobile Explorer/Mobile Switching Center/Serving GPRS Support Node (MME/MSC/SGSN) C. MME/MSC/SGSN C may determine whether to register the terminal A as a temporary CSG member and then notify the member management server B about the determination result. Here, when the MME/MSC/SGSN C approves the temporary CSG member registration of the terminal A, an owner terminal may register the terminal A to the MME/MSC/SGSN C through the member management server B.

That is, in the related art, a server function needs to be added to H(e)NB in order to manage a temporary CSG member list. For the above operation, a user interface needs to be provided through a web or other schemes.

Accordingly, there is a desire for a method that may readily register, as a temporary CSG member, a terminal that is not a temporary CSG member.

### SUMMARY

An aspect of the present invention provides a terminal registration method and system that may register, as a temporary closed subscriber group (CSG) member, a terminal that is not a temporary CSG member through an owner terminal in a small base station operating as a CSG cell.

An aspect of the present invention also provides a terminal registration method and system that may register, as a temporary CSG member, a terminal that is requested by an owner terminal to be registered as a temporary CSG member over a subscriber network, without the owner terminals' direct access to a system.

According to an aspect of the present invention, there is provided a system for registering a terminal, including: a verification unit to verify whether the terminal is a closed subscriber group (CSG) member in response to a registration request to a small base station that is received from the terminal; a search unit to search for an owner terminal of the small base station when the terminal is not a CSG member as the verification result; a request unit to request the found owner terminal to determine whether to approve a CSG member registration of the terminal; and a registration unit to register the terminal as a temporary CSG member when the owner terminal approves the CSG member registration in response to the request.

According to another aspect of the present invention, there is provided a method of registering a terminal, including: verifying whether the terminal is a CSG member in response to a registration request to a small base station that is received from the terminal; searching for an owner terminal of the small base station when the terminal is not a CSG member as the verification result; requesting the found owner terminal to determine whether to approve a CSG member registration of the terminal; and registering the terminal as a temporary CSG member when the owner terminal approves the CSG member registration in response to the request.

According to embodiments of the present invention, in a small base station operating as a closed subscriber group (CSG) cell, it is possible to register, as a temporary CSG member, a terminal that is not a temporary CSG member through an owner terminal. Therefore, it is possible to enhance the user convenience.

Also, according to embodiments of the present invention, it is possible to add a temporary CSG member according to a policy of an owner terminal, without adding a function to a small base station. Therefore, it is possible to enhance a use of the small base station in a CSG cell.

### BRIEF DESCRIPTION OF THE DRAWINGS

FIG. 1 is a diagram illustrating a system for registering a temporary closed subscriber group (CSG) member according to a related art.

FIG. 2 is a diagram illustrating a network connection relationship among a terminal registration system and terminals according to an embodiment of the present invention.

FIG. 3 is a block diagram illustrating a configuration of a terminal registration system according to an embodiment of the present invention.

FIG. 4 is a diagram illustrating an example of a temporary member database included in a terminal registration system according to an embodiment of the present invention.

FIG. 5 is a flowchart illustrating a method of registering a terminal according to an embodiment of the present invention.

### DETAILED DESCRIPTION OF THE ILLUSTRATED EMBODIMENTS

Reference will now be made in detail to embodiments of the present invention, examples of which are illustrated in the accompanying drawings, wherein like reference numerals refer to the like elements throughout. The embodiments are described below in order to explain the present invention by referring to the figures. It will be understood that for the purposes of this disclosure, "at least one of X, Y, and Z" can be construed as X only, Y only, Z only, or any combination of two or more items X, Y, and Z (e.g., XYZ, XYY, YZ, ZZ).

The term 'terminal' used here refers to all mobile apparatuses, for example, a notebook computer, a cellular phone, a personal communication service (PCS) phone, a satellite/terrestrial digital multimedia broadcasting (DMB) phone, a personal digital assistant (PDA), a portable multimedia player (PMP), an MP3 player, and the like.

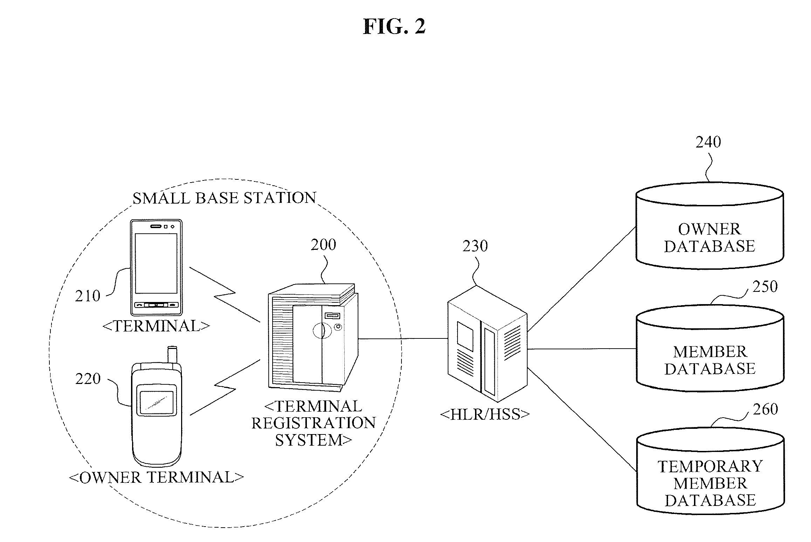

FIG. 2 is a diagram illustrating a network connection relationship among a terminal registration system and terminals according to an embodiment of the present invention.

As shown in FIG. 2, a terminal 210 may request a terminal registration system 200 for registration to a small base station. The small base station is also referred to as Home Node B. That is, even though the terminal 210 does not belong to the current small base station, the terminal 210 may access the small base station and request the terminal registration system 200 for registration as a temporary closed subscriber group (CSG) member in order to use a specialized mobile communication system service.

The terminal registration system 200 may verify whether the terminal 210 requesting the registration is a CSG member. A CSG controls only a predetermined terminal group, registered to the small base station, to be accessible to the small base station. To verify whether the terminal 210 is a CSG member, the terminal registration system 200 may search a temporary member database 260 through a Home Location Register/Home Subscriber Server (HLR/HSS) 230. When a terminal corresponding to the terminal 210 is not found in the temporary member database 260, the terminal registration system 200 may search a member database 250. When the terminal corresponding to the terminal 210 is not found in the member database 250, the terminal registration system 200 may determine that the terminal 210 is not a CSG member.

In this case, the terminal registration system 200 may search an owner database 240 for an owner terminal 220 through the HLR/HSS 230, and may request the owner terminal 220 to determine whether to approve a CSG member registration of the terminal 210. Here, the terminal registration system 200 may transmit information associated with the terminal 210 to the owner terminal 220. Information associated with the terminal 210 may include the number of registration requests, an identification (ID) number, and position information.

The owner terminal 220 may determine whether to register the terminal 210 as a temporary CSG member based on information associated with the terminal 210. When the owner terminal 220 approves the temporary CSG member registration of the terminal 210, the owner terminal 220 may notify the terminal registration system 200 that the terminal 210 is approved as a temporary CSG member.

When the owner terminal 220 approves the temporary CSG member registration of the terminal 210, the terminal registration system 200 may register the terminal 210 as a temporary CSG member. For example, the terminal registration system 200 may register the terminal 210 in the temporary member database 260 and transmit, to the terminal 210, a registration complete message indicating that the terminal 210 is registered as a temporary CSG member. On the contrary, when the owner terminal 220 rejects the CSG member registration of the terminal 210, the terminal registration system 200 may transmit a registration reject message to the terminal 210.

According to an embodiment, the terminal registration system 200 may determine a valid time and a priority with respect to the terminal 210 and store the determined valid time and priority in the temporary member database 260 in association with the terminal 210. In addition, while notifying the terminal 210 that the terminal 210 is registered as a temporary CSG member, the terminal registration member 200 may transmit the valid time and the priority to the terminal 210. In this case, the terminal 210 may be admitted to the small base station as a temporary CSG member during only the valid time.

According to another embodiment, when the found owner terminal 220 is not included in the small base station, the terminal registration system 200 may search the member database 250 for a temporary owner terminal (not shown) and may request the found temporary owner terminal to determine whether to approve the CSG member registration of the terminal 210. When the temporary owner terminal approves the CSG member registration of the terminal 210, the terminal registration system 200 may register the terminal 210 as a temporary CSG member.

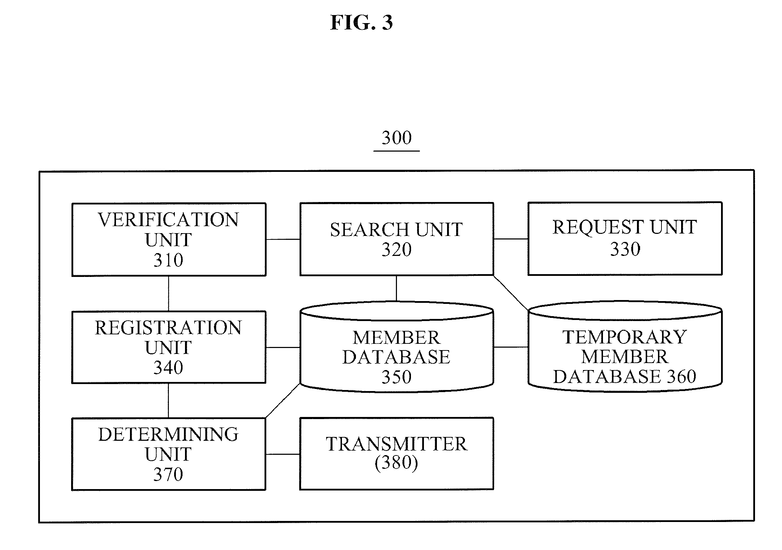

FIG. 3 is a block diagram illustrating a configuration of a terminal registration system according to an embodiment of the present invention.

As shown in FIG. 3, a terminal registration system 300 may include a verification unit 310, a search unit 320, a request unit 330, a registration unit 340, a member database 350, a temporary member database 360, a determining unit 370, and a transmitter 380.

In response to a registration request to a small base station that is received from the terminal 210, the verification unit 310 may verify whether the terminal 210 is a CSG member. For the above operation, the verification unit 310 may verify whether the terminal 210 is included in a member list, by referring to the member database 350.

The member database 350 may store a member list that is registered to the small base station. The member list is a list of terminals that are included in CSG members. Therefore, when the terminal 210 is not included in the member list, the verification unit 310 may verify that the terminal 210 is not a CSG member.

Also, the verification unit 310 may verify whether the terminal 210 is included in a temporary member list, by referring to the temporary member database 360.

The temporary member database 360 may store a temporary member list that is registered to the small base station. The temporary member list is a list of terminals that are not registered as a regular CSG member and are temporarily included as temporary CSG members depending on necessities. Accordingly, when the terminal 210 is not included in the temporary member list, the verification unit 310 may verify that the terminal 210 is not a CSG member.

When the terminal 210 is not a CSG member as the verification result, the search unit 320 may search for the owner terminal 220 of the small base station. Here, the search unit 320 may search an owner database through an HLR or an HSS that manages the small base station.

The request unit 330 may request the found owner terminal 220 to determine whether to approve the CSG member registration of the terminal 210. Here, the request unit 330 may transmit information associated with the terminal 210 to the found owner terminal 220, and may receive, from the owner terminal 220, a determination on whether to approve the CSG member registration of the terminal 210, based on the transmitted information.

For example, information associated with the terminal 210 may include one of the number of registration requests, an ID number, and position information. The owner terminal 220 may determine whether to approve registration of the terminal 210 as a CSG member, based on one of the number of registration requests, the ID number, and position information. The number of registration requests may be the number of times that the registration to the small base station is requested, the ID number may be a telephone number of the terminal 210, and the position information may be information associated with a current position of the terminal 210.

For example, when the number of registration requests is at least three times, and when the position information indicates that the terminal 210 is proximate to the small base station, the owner terminal 220 may approve the terminal 210 as a temporary CSG member. Alternately, when the number of registration requests is zero and when the position information indicates that the terminal 210 is spaced apart from the small base station by at least a predetermined distance, the owner terminal 220 may reject the temporary CSG member registration of the terminal 210. Next, the owner terminal 220 may determine whether to register the terminal 210 as a temporary CSG member and then transmits the determination result to the terminal registration system 300.

When the owner terminal 220 approves the CSG member registration of the terminal 210, the registration unit 340 may register the terminal 210 as a temporary CSG member. That is, the registration unit 340 may register the terminal 210 in the temporary member database 360. The transmitter 380 may notify the terminal 210 that the terminal 210 is registered as a temporary CSG member.

According to an embodiment, the determining unit 370 may determine a valid time and a priority with respect to the terminal 210. The valid time may be a time at which the terminal 210 is registered as a temporary CSG member, and may be determined based on the priority. The priority may be a level of a temporary CSG member, and may be determined based on the number of registration requests. Accordingly, the determining unit 370 may determine the priority based on the number of registration requests associated with the terminal 210, and may determine the valid time based on the determined priority.

The temporary member database 360 may store the determined valid time and priority in association with the terminal 210.

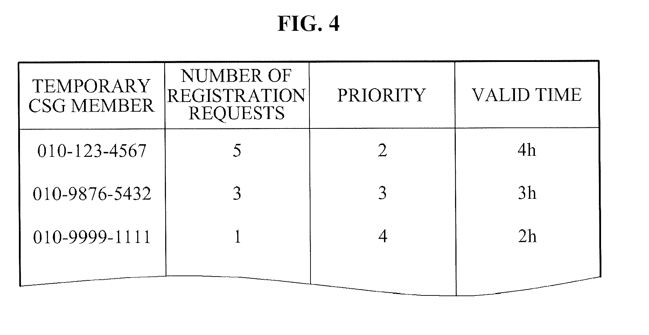

FIG. 4 is a diagram illustrating an example of a temporary member database included in a terminal registration system according to an embodiment of the present invention.

As shown in FIG. 4, the temporary database 360 may store a temporary CSG member (O10-123-4567), the number of registration requests (5), a priority (2), and a valid time (4h). The temporary member database 360 may store a telephone number of a temporary CSG member in order to identify the temporary CSG member. The number of registration requests may be the number of times that a registration as a temporary CSG member is requested of the terminal registration system 300, the priority may be a level of the temporary CSG member, and the valid time may be an expire time assigned to the terminal 210 based on the priority. Accordingly, the terminal 210 may use a specialized service in the small base station as a temporary CSG member during only the valid time.

For example, when the number of registration requests is at least four times, the determining unit 370 may determine the priority as '2' and thereby determine the valid time as '4' hours. When the number of registration requests is at least three times, the determining unit 370 may determine the priority as '3' and thereby determine the valid time as '3' hours. When the number of registration requests is at least once, the determining unit 370 may determine the priority as '4' and thereby determine the valid time '2' hours.

The transmitter 380 may notify the terminal 210 that the terminal 210 is registered as a temporary CSG member and also transmit the determined valid time and priority. That is, the transmitter 380 may transmit, to the terminal 210, a registration complete message including the valid time and the priority. When the owner terminal 220 rejects the CSG member registration of the terminal 210, the transmitter 380 may transmit a registration reject message to the terminal 210.

According to another embodiment, when the found owner terminal 220 is not included in the small base station, the search unit 320 may search the member database 350 for a temporary owner terminal. The temporary owner terminal may be a terminal having a highest level in the member list, or may be a terminal that is assigned with a proxy right from the owner terminal 220. Accordingly, the request unit 330 may request the found temporary owner terminal to determine whether to approve the CSG member registration of the terminal 210. When the temporary owner terminal approves the CSG member registration of the terminal 210, the registration unit 340 may register the terminal 210 as a temporary CSG member. That is, when the owner terminal 220 is positioned outside the small base station, the temporary owner terminal may register a temporary CSG member on the behalf of the owner terminal 220.

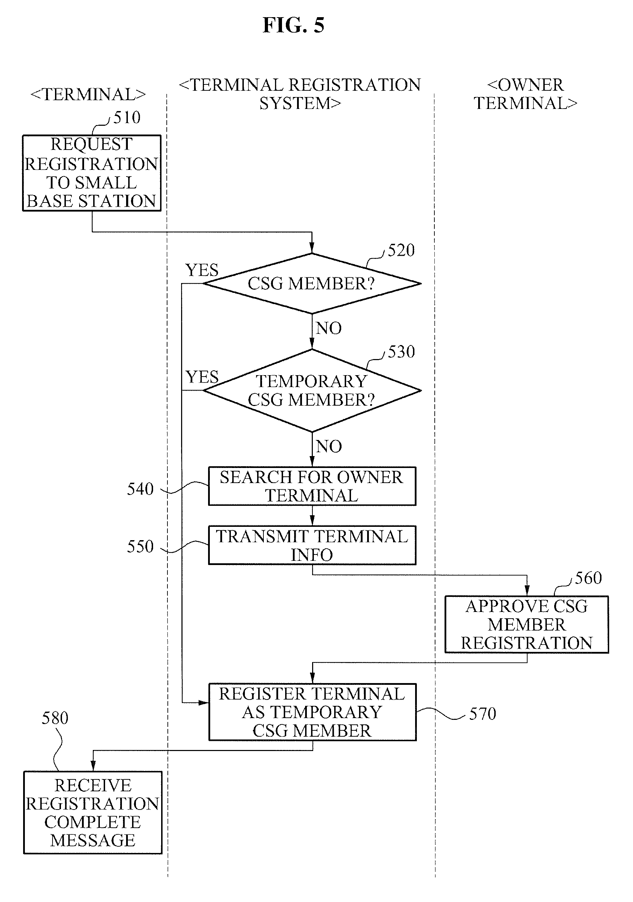

FIG. 5 is a flowchart illustrating a method of registering a terminal according to an embodiment of the present invention.

The terminal registration method may be performed by the terminal registration system 300 of the present invention. Accordingly, the terminal registration method will be described with reference to FIG. 2, FIG. 3, and FIG. 5.

In operation 510, the terminal 210 may request the terminal registration system 300 for a registration to a small base station. That is, even though the terminal 210 does not belong to the current small base station, the terminal 210 may access the small base station and request the terminal registration system 300 for a registration as a temporary CSG member in order to use a specialized mobile communication system service.

In operation 520, the terminal registration system 300 may verify whether the terminal 210 requesting the registration is a CSG member. For the above operation, the terminal registration system 300 may verify whether the terminal 210 is included in a member list by referring to the member database 350.

When the terminal 210 is not included in the member list, the terminal registration system 300 may verify whether the terminal 210 is included in a temporary member list by referring to the temporary member database 360 in operation 530.

When the terminal 210 is not a CSG member, the terminal 210 may search for the owner terminal 220 of the small base station in operation 540. Here, the terminal registration system 300 may search an owner database for the owner terminal 220 through the HLR/HSS 230.

In operation 550, the terminal registration system 300 may request the found owner terminal 220 to determine whether to approve a CSG member registration of the terminal 210, and may transmit information associated with the terminal 210 to the owner terminal 220. Information associated with the terminal 210 may include one of the number of registration requests, an ID number, and position information.

In operation 560, the owner terminal 220 may determine whether to approve registration of the terminal 210 as a CSG member based on the transmitted information. For example, when the number of registration requests is at least three times, and when the position information indicates that the terminal 210 is proximate to the small base station, the owner terminal 220 may approve the terminal 210 as a temporary CSG member. Alternately, when the number of registration requests is zero and when the position information indicates that the terminal 210 is spaced apart from the small base station by at least a predetermined distance, the owner terminal 220 may reject the temporary CSG member registration of the terminal 210. Next, the owner terminal 220 may determine whether to register the terminal 210 as a temporary CSG member and then transmit the determination result to the terminal registration system 300.

In operation 570, when the owner terminal 220 approves the CSG member registration of the terminal 210, the terminal registration system 300 may register the terminal 210 as a temporary CSG member. That is, the terminal registration system 300 may register the terminal 210 in the temporary member database 360 and may transmit, to the terminal 210, a registration complete message indicating that the terminal 210 is registered as a temporary CSG member.

In operation 580, the terminal 210 may receive the registration complete message from the terminal registration system 300. Accordingly, the terminal 210 may use a specialized service provided by the small base station.

However, when the owner terminal 220 rejects the CSG member registration of the terminal 210, the terminal registration unit 300 may transmit a registration reject message to the terminal 210.

According to an embodiment, the terminal registration system 300 may determine a priority based on the number of registration requests associated with the terminal 210, and may determine a valid time and a priority with respect to the terminal 210 that determines the valid time, based on the determined priority, and may store the determined valid time and priority in the temporary member database 360 in association with the terminal 210. In this case, the terminal registration system 300 may transmit the determined valid time and priority to the terminal 210.

According to another embodiment, when the found owner terminal 220 is not included in the small base station, the terminal registration system 300 may search the member database 350 for a temporary owner terminal, and may request the found temporary owner terminal to determine whether to approve the CSG member registration of the terminal 210. When the temporary owner terminal approves the CSG member registration of the terminal 210, the terminal registration system 300 may register the terminal 210 as a temporary CSG member.

The above-described exemplary embodiments of the present invention may be recorded in a non-transitory computer-readable media including program instructions to implement various operations embodied by a computer. The media may also include, alone or in combination with the program instructions, data files, data structures, and the like. Examples of a non-transitory computer-readable media include magnetic media such as hard disks, floppy disks, and magnetic tape; optical media such as CD ROM disks and DVDs; magneto-optical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention, or vice versa.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

## Claims

1. A system to register a terminal, comprising:
a verification unit to determine if the terminal is a closed subscriber group (CSG) member in response to a registration request from the terminal to a small base station;
a search unit to search for an owner terminal of the small base station if the terminal is not a CSG member;
a request unit to request the owner terminal to determine whether to approve the registration request of the terminal; and
a registration unit to register the terminal as a temporary CSG member if the owner terminal approves the registration request.

2. The system of claim 1, further comprising:
a member database to store a member list of member terminals registered to the small base station; and
a temporary member database to store a temporary member list of temporary members registered to the small base station,
wherein the verification unit determines whether the terminal is included in the member list, by referring to the member database, and if the terminal is not included in the member list determines whether the terminal is included in the temporary member list, by referring to the temporary member list, and if the terminal is not included in the temporary member list determines that the terminal is not a CSG member.

3. The system of claim 1, wherein the request unit transmits information associated with the terminal to the owner terminal, and receives, from the owner terminal, a determination on whether to approve the registration request of the terminal based on the transmitted information.

4. The system of claim 3, wherein:
information associated with the terminal comprises at least one of a number of registration requests, an identification (ID) number, and position information, and
the request unit receives, from the owner terminal, the determination on whether to approve the registration request of the terminal based on at least one of the number of registration requests, the ID number, and the position information.

5. The system of claim 1, further comprising:
a determining unit to determine a valid time and a priority corresponding to the terminal;
a temporary member database to store the valid time and priority corresponding to the terminal; and
a transmitter to notify the terminal that the terminal is registered as the temporary CSG member, and to transmit the valid time and the priority to the terminal.

6. The system of claim 5, wherein the determining unit determines the priority based on a number of registration requests associated with the terminal, and determines the valid time based on the priority.

7. The system of claim 1, further comprising:
a member database to store a member list of member terminals registered to the small base station,
wherein if the owner terminal is not found, the search unit searches the member database for a temporary owner terminal, and
the request unit requests the temporary owner terminal to determine whether to approve the registration request of the terminal, and
if the temporary owner terminal approves the registration request of the terminal, the registration unit registers the terminal as the temporary CSG member.

8. The system of claim 1, further comprising:
a transmitter to transmit a registration reject message to the terminal if the owner terminal rejects the registration request.

9. A method for registering a terminal, comprising:
determining if the terminal is a closed subscriber group (CSG) member in response to a registration request from the terminal to a small base station;
searching for an owner terminal of the small base station if the terminal is not a CSG member;
requesting the owner terminal to determine whether to approve the registration request of the terminal; and
registering the terminal as a temporary CSG member if the owner terminal approves the registration request.

10. The method of claim 9, further comprising:
storing, in a member database, a member list of member terminals registered to the small base station; and
storing, in a temporary member database, a temporary member list of temporary members registered to the small base station,
wherein determining if the terminal is a CSG member comprises:
determining whether the terminal is included in the member list by referring to the member database; and
determining whether the terminal is included in the temporary member list, by referring to the temporary member list, if the terminal is not included in the member list.

11. The method of claim 9, wherein requesting the owner terminal to determine whether to approve the registration request further comprises:
transmitting information associated with the terminal to the owner terminal; and
receiving, from the owner terminal, a determination on whether to approve the registration request of the terminal based on the transmitted information.

12. The method of claim 11, wherein:
information associated with the terminal comprises at least one of a number of registration requests, an identification (ID) number, and position information, and
requesting the owner terminal to determine whether to approve the registration request further comprises receiving, from the owner terminal, a determination on whether to approve the CSG member registration of the terminal based on at least one of the number of registration requests, the ID number, and the position information.

13. The method of claim 9, wherein the registering the terminal as a temporary CSG member comprises:
determining a valid time and a priority corresponding to the terminal;
storing the valid time and priority in a temporary member database corresponding to the terminal; and
notifying the terminal that the terminal is registered as the temporary CSG member, and transmitting the valid time and the priority to the terminal.

14. The method of claim 13, wherein determining the valid time and the priority comprises:
determining the priority based on a number of registration requests associated with the terminal; and
determining the valid time based on the priority.

15. The method of claim 9, further comprising:
storing, in a member database, a member list of member terminals registered to the small base station,
searching the member database for a temporary owner terminal if the owner terminal is not found;
requesting the temporary owner terminal determine whether to approve the registration request of the terminal; and
registering the terminal as the temporary CSG member if the temporary owner terminal approves the registration request.

16. The method of claim 9, further comprising:
transmitting a registration reject message to the terminal if the owner terminal rejects the registration request.
